# EUROPÄISCHE PATENTSCHRIFT

(11) **EP 1 647 360 B1**
(45) Veröffentlichungstag und Bekanntmachung des Hinweises auf die Patenterteilung: **12.12.2007**
(21) Anmeldenummer: 05109541.2
(22) Anmeldetag: 13.10.2005
(51) Int. Cl.: B24B 13/00, B24B 13/06, H02K 41/02, H01L 41/09, B23Q 1/34, B23Q 5/027, B23Q 1/36

(54) **Hochdynamische Linsenbearbeitungsmaschine und Linearantrieb für eine solche**
Highly dynamic lens machining tool and linear drive therefor
machine d'usinage de lentilles à dynamique rapide et actionneur linéaire destiné à celui-ci

(30) Priorität: 13.10.2004 DE 102004049951
(43) Veröffentlichungstag der Anmeldung: 19.04.2006
(73) Patentinhaber: Schneider GmbH + Co. KG, 35239 Steffenberg (DE)
(72) Erfinder: Schneider, Gunter, 35037 Marburg (DE); Buchenauer, Helwig, 35232 Dautphetal-Buchenau (DE); Börner, Ulf, 35037 Marburg (DE); Krämer, Klaus, 35232 Dautphetal-Friedensdorf (DE)
(74) Vertreter: Thews, Karl

(56) Entgegenhaltungen:
- EP-A- 1 413 938
- EP-A- 1 495 839
- DD-A3- 260 847
- DE-A1- 10 126 039
- DE-U1- 8 513 146

## Beschreibung

Die Erfindung bezieht sich auf einen Linearantrieb für eine hochdynamische Linsenbearbeitungsmaschine mit einer linearen Oszillationsachse O1 für einen Werkzeughalter, wobei der Linearantrieb ein Gehäuse mit einem linear bewegbar gelagerten Läufer für den Werkzeughalter und/oder den Werkstückhalter aufweist und der Läufer über eine aus Blattfedern gebildete Blattfederlagerung im Gehäuse koaxial zur Oszillationsachse O1 geführt ist, wobei die Führungsanordnung aus einem ersten Führungssegment und einem in Richtung der Oszillationsachse O1 mit Abstand angeordneten zweiten Führungssegment gebildet ist.

Es ist bereits eine Anordnung zur reibungsfreien, querstabilen, torsionssteifen, linear federnden Abstützung aus der DD 260 847 A3 bekannt. Die Anordnung weist Formblattfedern auf, die geschlitzt sind und an den Enden der dadurch entstehenden Federzungen fest in die ineinander federnden Bauteile eingespannt sind. Die verschiedenen Formblattfedern liegen dabei parallel zueinander, wobei die Anordnung symmetrisch ausgebildet ist. Die Einspannstellen der jeweiligen Formblattfeder liegen in einer parallel zur Federrichtung liegenden Ebene, wobei die Gesamtbreite der Federzungen, die jeweils in den beweglichen Bauteilen eingespannt sind, im gleichen Abstand von der Einspannstelle bei einer Formblattfeder gleich ist. Durch die Winkelstellung der jeweiligen Blattfeder beim Biegen wird eine rechtwinklig zur Bewegungsrichtung verlaufende Querbewegung des Aktors generiert.

Die WO 97/13603 gemäß Figur 1 und zugehöriger Beschreibung, Seite 9, vorletzter Absatz, beschreibt eine Bearbeitungsmaschine zum Herstellen von optischen Oberflächen und Formschalen nach individueller Datenvorgabe in einem einzigen Prozessschritt. Dabei ist ein in Z-Richtung oszillierender Werkzeughalter vorgesehen, dem wiederum ein Werkstückhalter mit einer Spindel auf einem in der Z-Achse bewegbaren Schlitten zugeordnet ist. Der Schlitten wird dabei zur Voreinstellung in eine geeignete Position gebracht und dann für die Dauer der Bearbeitung festgeklemmt. Ein erfindungsgemäßer dynamischer Antrieb, der während des Bearbeitungsprozesses bewegt wird, ist in dieser Druckschrift nicht beschrieben.

Die DE 101 26 039 A1 offenbart einen Linearantrieb gemäß Oberbegriff des Anspruchs 1 und beschreibt eine Blattfederlagerung für einen Schlitten mit einem aus Blattfedern gebildeten ersten Führungssegment und einem in Richtung der Oszillationsachse O1 mit Abstand angeordneten, aus Blattfedern gebildeten zweiten Führungssegment. Beide Führungssegmente dienen der elastischen Lagerung des Läufers, so dass dieser über den Aktor in eine translatorische Bewegung versetzt werden kann.

Der Erfindung liegt die Aufgabe zugrunde, einen Linearantrieb derart auszubilden und anzuordnen, dass eine hochdynamische und präzise Bearbeitung des jeweiligen Werkstücks gewährleistet ist.

Gelöst wird die Aufgabe erfindungsgemäß dadurch, dass die Blattfederlagerung neben der Führungsanordnung eine daran angeschlossene, aus Blattfedern gebildete Kopplungsanordnung zwecks Kopplung der beiden Führungssegmente aufweist.

Hierdurch wird erreicht, dass ein einfacher und insoweit wartungsfreier Linearantrieb für den Werkzeughalter und/oder den Werkstückhalter gewährleistet ist. Durch den Einsatz einer Blattfederlagerung ist ein Einsatz von aufwendigen Gleit- und/oder Wälzlagern nicht erforderlich. Der durch den Einsatz der Blattfederlagerung insoweit reduzierte Hub der jeweiligen Oszillationsachse kann durch die Überlagerung bzw. Kombination der vorgenannten doppelten Oszillationsanordnung ausgeglichen werden. Neben der Oszillationsfrequenz von 25 bis 200 Hz wird vorzugsweise ein Oszillationsweg von 1 bis 20 mm zwecks Bearbeitung der optischen Fläche eines Linsenrohlings zur Verfügung gestellt. Neben der zweifachen stirnseitigen Lagerung des Läufers ist eine Kopplung der Lagerung gewährleistet.

Vorteilhaft ist es, dass die Kopplungsanordnung und/oder die Führungsanordnung mittel- oder unmittelbar mit dem Läufer und/oder mit dem Gehäuse verbunden sind. Der Einsatz von jeweils einer insoweit eine Baueinheit bildenden Kopplungs- und Führungsanordnung gewährleistet die erforderliche Steifigkeit der Lagerung einerseits sowie die Optimierung des Schwingungsverhaltens der gesamten Anordnung, insbesondere mit Rücksicht auf die hier vorzusehenden Frequenzen von 25 bis 200 Hz.

Hierzu ist es vorteilhaft, dass das jeweilige Führungssegment mindestens ein balken- oder plattenförmiges Versteifungselement aufweist und das jeweilige Versteifungselement vorzugsweise kohlefaserverstärkt ist oder aus Kohlefaser gebildet ist, wobei das jeweilige Versteifungselement auf ein am Führungssegment vorzugsweise angeschweißtes Adapterelement aufgeklebt ist. Durch den Einsatz von Versteifungselementen reduziert sich der elastische Teil des jeweiligen Führungssegments auf dessen Endbereiche und den mittleren Bereich, also im Bereich des Läufers bzw. der Gehäuseverbindung. Die elastische Länge reduziert sich dabei auf etwa 5 mm bis 15 mm. Die Ausbildung als bzw. aus Kohlefaser gewährleistet ein optimales Gewichtsverhältnis. Mittels des Adapterelements kann die Klebeverbindung neben der Anlagefläche auch die Randbereiche bzw. Stirnseiten des Adapterelements mit einschließen.

Dabei ist es in vorteilhafter Weise vorgesehen, dass der Läufer in Richtung der Oszillationsachse O1 eine vordere Stirnseite und eine hintere Stirnseite aufweist, wobei zur Bildung eines ersten und eines zweiten Läuferlagers das jeweilige Führungssegment im Bereich der Stirnseite am Läufer befestigt ist. Der Einsatz von zwei Führungssegmenten bewirkt die beidseitige Aufnahme des Läufers an seinen beiden Stirnseiten. Durch die stirnseitige Anordnung der Führungssegmente am Läufer kann der damit gegebene Zwischenraum für die Anbindung weiterer Läuferlagerteile genutzt werden.

Von besonderer Bedeutung ist für die vorliegende Erfindung, dass die in radialer Richtung zur Oszillationsachse O2 äußeren Endbereiche der Führungssegmente mit der Kopplungsanordnung verbunden sind. Die Anbindung der Führungssegmente an die Kopplungsanordnung gewährleistet die erforderliche Kopplung bzw. Verspannung und damit die gewünschte Einstellung des Schwingungsverhaltens der beiden Führungssegmente. Die jeweils äußeren Enden des jeweiligen Führungssegments dienen dabei als optimale Anbindungsstelle für die Anbindung der Kopplungsanordnung.

Im Zusammenhang mit der erfindungsgemäßen Ausbildung und Anordnung ist es von Vorteil, dass die Kopplungsanordnung aus einem ersten Kopplungssegment und einem zweiten Kopplungssegment gebildet ist, die mit Bezug zur Oszillationsachse O1 gegenüberliegend zueinander angeordnet sind. Somit wird erreicht, dass die äußeren Enden der Führungssegmente, die ebenfalls in radialer Richtung zur Oszillationsachse ausgerichtet sind und mit Bezug zur Oszillationsachse ebenfalls gegenüberliegend angeordnet sind, verbunden werden können.

Vorteilhaft ist es ferner, dass mindestens ein Ende des ersten Führungssegments und mindestens ein Ende des zweiten Führungssegments über mindestens ein Kopplungssegment verbunden sind. Diese mechanische Kopplung der Führungssegmente durch das jeweilige Kopplungssegment gewährleistet ein optimales Schwingungsverhalten an den Führungssegmenten, insbesondere mit Rücksicht auf die verschiedenen auftretenden Eigenfrequenzen derselben. Die Eigenfrequenzen werden durch die Kopplungs- und Führungsanordnung beeinflusst und damit in einen Frequenzbereich außerhalb der Bearbeitungsfrequenz verschoben.

Hierzu ist es vorteilhaft, dass die Verbindung zwischen dem Führungssegment und dem Kopplungssegment als Steckverbindung ausgebildet ist. Das jeweilige Führungssegment weist im Bereich seines jeweiligen Endes mehrere Ausnehmungen auf, in die entsprechende Zapfen des Kopplungssegments eingesteckt werden können. Zusätzlich zu dieser Steckverbindung kann eine Verschweißung vorgesehen werden.

Außerdem ist es vorteilhaft, dass das Führungssegment eine rautenförmige oder ovale Doppelform aufweist und über ein Gehäuselager am Gehäuse befestigt ist. Durch diese Grundform wird neben der Anbindungsstelle an das Gehäuse, also dem Gehäuselager, zusätzlich ebenfalls auf der Höhe des Läufers die Anbindung an den Läufer bzw. das Läuferlager gewährleistet, wobei ausgehend von dieser zentralen, im Bereich des Läufers befindlichen Anbindung die sich in radialer Richtung nach außen erstreckenden Enden die weitere Anbindung des Führungssegments an das jeweilige Kopplungssegment zulassen.

Ferner ist es vorteilhaft, dass zwischen dem Gehäuse und dem Läufer ein in radialer Richtung zur Oszillationsachse O1 ausgerichtetes, als Lenker ausgebildetes Mitnehmerelement vorgesehen ist, wobei der Lenker über ein erstes Gelenk mit dem Gehäuse und über ein zweites Gelenk mit dem Läufer verbunden ist. Der Lenker stellt dabei das Kernstück der Blattfederlagerung dar, insbesondere mit Rücksicht auf das auftretende Schwingungsverhalten derselben und die damit notwendige Führung der sich ergebenden Bewegungsabläufe. Der Lenker wird dabei durch oszillierende Bewegung des Läufers angeregt und vollführt somit eine Verschwenkbewegung um das gehäuseseitige erste Gelenk. Die Gelenke sind dabei vorzugsweise als elastische Federgelenke ausgebildet, die keinerlei Spiel aufweisen und neben ihrem Freiheitsgrad eine ausreichende Steifigkeit besitzen.

Dabei ist es von Vorteil, dass mindestens ein Kopplungssegment über ein drittes Gelenk mit dem Lenker verbunden ist. Die Anbindung des Kopplungssegments an den Lenker gewährleistet eine von der Schwenkbewegung des Lenkers abhängige Oszillationsbewegung des Kopplungssegments, welche sich wiederum auf die jeweils damit verbundenen Enden der Führungssegmente überträgt. Das dritte Gelenk ist dabei ebenfalls als elastisches Biegegelenk ausgebildet, so dass das Kopplungselement durch die Pendelbewegung des Lenkers einer minimalen Biegebeanspruchung unterliegt.

Schließlich ist es von Vorteil, dass das Gelenk als Wälzlager oder als elastisches Biegegelenk ausgebildet ist. Die Ausbildung als elastisches Biegegelenk bzw. Federgelenk gewährleistet eine absolut spielfreie Anbindung bzw. Verbindung der einzelnen Segmente, die mit Rücksicht auf die angestrebte Bearbeitungsfrequenz von 25 bis 200 Hz und mit Rücksicht auf die zu bewegenden Massen die ausreichende Steifigkeit einerseits sowie die ausreichende Wartungsfreiheit und die damit erforderliche Lastzahl gewährleisten.

Vorteilhaft ist es hierzu auch, dass in radialer Richtung zur Oszillationsachse O1 zwischen dem ersten Gelenk und dem zweiten Gelenk ein Abstand A vorgesehen ist und zwischen dem ersten Gelenk und dem dritten Gelenk ein Abstand B vorgesehen ist, wobei das Verhältnis A zu B der beiden Abstände 2 beträgt. Ein Längenverhältnis von 2 gewährleistet, dass die Auslenkung des Kopplungssegments in Richtung der Oszillationsachse genau halb so groß ist wie die Auslenkung des Läufers selbst. Eine Verschiebung des Läufers in Richtung der Oszillationssachse, die eine gegensätzliche Veränderung des jeweiligen Öffnungswinkels α1, α2 der rautenförmigen Führungssegmente mit sich bringt, führt zu einer Verschiebung der Enden der Führungssegmente in Richtung der Oszillationsachse. Diese Verschiebung der Enden entspricht dabei der Verschiebung des am Lenker mittig angeordneten Kopplungssegments. Je nach Ausbildung der Führungssegmente ist dabei die Variation dieses Abstandsverhältnisses vorzusehen.

Letztlich ist es von Vorteil, dass das zweite Gelenk zusätzlich eine Relativbewegung zwischen dem Lenker und dem Läufer in rechtwinkliger Richtung zur Oszillationsachse O1 gewährleistet. Durch die Kippbewegung des Lenkers verändert sich der Abstand zwischen dem ersten und zweiten Lager bzw. Biegepunkt, so dass der damit erforderliche Längenausgleich rechtwinklig zur Oszillationsachse bzw. in Richtung des Lenkers durch das zweite Gelenk gewährleistet ist.

Vorteilhaft ist es hierzu auch, dass mindestens ein Kopplungssegment über ein Kopplungsglied mit dem dritten Gelenk verbunden ist. Durch die Verwendung des Kopplungsgliedes kann die Position des Kopplungssegments relativ zum Lenker mit Rücksicht auf die vorgenannte Anbindung unabhängig von dieser Anbindung variiert werden. Das Kopplungssegment ist somit beabstandet zum Lagerpunkt bzw. zur Schwenkachse des dritten Gelenks angeordnet, wobei mittels des Kopplungsgliedes der durch den Lenker gebildete Verschiebeweg in Abhängigkeit von der Position des dritten Lagers am Lenker gewährleistet ist. Dabei können auch mehrere Kopplungssegmente, insbesondere diejenigen, die benachbart zu einem Lenker angeordnet sind, über ein Kopplungsglied mit dem Lenker verbunden werden.

Ferner ist es vorteilhaft, dass das Kopplungssegment und/oder das Kopplungsglied ein U-, L- oder dreieckförmiges Querschnittsprofil aufweist. Diese Ausbildung gewährleistet die erforderliche Steifigkeit mit Rücksicht auf Biege- und Torsionsbeanspruchungen während des Betriebs.

Dabei ist es vorteilhaft, dass das Kopplungssegment eine als elastisches Gelenk ausgebildete Verbindungsstelle mit den Enden der Führungssegmente aufweist. Das elastische Gelenk ist flach ausgebildet, so dass die relative Auslenkbewegung zwischen dem Kopplungssegment und dem jeweiligen Führungssegment ausgeglichen werden kann. Die vorgenannte Steifigkeit ist damit im Bereich der Enden aufgehoben.

Vorteilhaft ist es auch, dass der Abstand zwischen dem Gehäuse und dem Lenker und/oder dem ersten Gelenk über eine Einstellvorrichtung einstellbar ist. Mit Rücksicht auf die gewünschten Abstandsverhältnisse zwischen dem ersten und dem zweiten Lager einerseits sowie dem zweiten und dem dritten Lager andererseits gewährleistet die Einstellvorrichtung unabhängig von gegebenen Fertigungstoleranzen die Einstellung des gewünschten Abstandsverhältnisses. Der Abstand zwischen dem ersten Lager und dem Gehäuse bzw. zwischen dem Lenker und dem Gehäuse ist variabel gestaltet, so dass sich in Abhängigkeit von dem gefertigten Abstand zwischen dem zweiten und dem dritten Lager der Abstand zwischen dem ersten und dem zweiten Lager variieren lässt.

Außerdem ist es vorteilhaft, dass der Läufer über den Lenker und über das Führungssegment am Gehäuse, das Führungssegment am Kopplungssegment, das Kopplungssegment über den Lenker am Gehäuse gelagert sind. Der so gebildete Kraftschlusskreislauf zwischen der Kopplungs- und Führungsanordnung einerseits sowie dem Gehäuse und dem Läufer andererseits gewährleistet ein optimales Schwingungsverhalten des Läufers sowie eine ausreichende Verschiebung der Eigenschwingungsfrequenz der beiden Anordnungen in einen Bereich außerhalb der Bearbeitungsfrequenz. Beim Einsatz eines Schneidmeißels als Werkzeug und bei der Bearbeitung von Kunststofflinsen beträgt die am Meißel aufzubringende Schneidkraft ca. 50 bis 200 Newton. Mit Rücksicht auf die Bearbeitungsfrequenz von 25 bis 200 Hz betreffend die Oszillationsfrequenz und mit Rücksicht auf die hier notwendigen Massen dieses Linearantriebs, nämlich den Läufer, den Werkzeughalter sowie den Aktor des Motors, wird deutlich, dass das sich ergebende Schwingungsverhalten des Antriebs im Zuge der gewünschten Fertigungsgenauigkeit optimal ausgestaltet sein muss. Dabei ist es vorteilhaft, dass der Werkzeughalter eine Höheneinstellung aufweist, so dass mit Rücksicht auf die Ausrichtung von Werkzeug und Werkstück neben den Bearbeitungsachsen, also der Oszillationsachse einerseits sowie einer radial zum Werkstück angeordneten Bearbeitungsachse, die erforderliche Einstellung in eine rechtwinklig zu diesen beiden Achsen angeordnete Raumachse gewährleistet ist.

Vorteilhaft ist es ferner, dass dem Läufer mindestens ein U-förmiger Linearmotor zugeordnet ist, der aus dem durch zwei parallel angeordnete Magnetschienen gebildeten Stator besteht, wobei die Magnetschienen den Aktor zwischen sich aufnehmen. Die Motorwicklung des Aktors bzw. des Stators ist eisenlos, in Kunststoff eingegossen und damit sehr leicht. Durch die U-Anordnung des Stators werden die generierten Anziehungskräfte der gegenüberliegenden Magneten kompensiert, so dass die Führung des Aktors über den Läufer bzw. die Blattfederlagerung gewährleistet ist. Der Einsatz von ausschließlich nicht-magnetischem Material, verhindert das Auftreten von Störfeldern sowie Störeinflüssen, die auf die Verwendung von beabstandeten Eisenteilen zurückzuführen sind. Daneben wird der Motor, insbesondere der Läufer wesentlich leichter.

Letztlich ist es vorteilhaft, dass der U-förmige Linearmotor in Bezug zu einer durch den Aktor aufgespannten Ebene parallel zu einer durch die Standfläche der Bodenplatte ausgebildeten Ebene ausgerichtet ist. Der Kraftangriff des Aktors am Läufer ist somit momentenfrei, da der Abstand zwischen dem Kraftangriffspunkt und dem Läuferschwerpunkt in vertikaler Richtung nahezu gleich Null ist.

Zudem ist es von Vorteil, dass der Linearantrieb in einer hochdynamischen Linsenbearbeitungsmaschine mit einem Maschinenbett, auf dem mindestens ein erster Werkzeughalter und ein eine Werkstückspindel aufweisender Werkstückhalter mit einer Rotationsachse R1 angeordnet sind, integriert ist, wobei der erste Werkzeughalter mindestens einen dynamischen Werkzeuglinearantrieb mit einer parallel zur Rotationsachse R1 verlaufenden ersten Oszillationsachse O1 aufweist, wobei der Linearantrieb dem Werkstückhalter zugeordnet ist und in Richtung einer parallel zur ersten Oszillationsachse O1 angeordneten zweiten Oszillationsachse O2 verfährt und ein stationär angeordneter zweiter Werkzeughalter vorgesehen ist, an den das Werkstück über die zweite Oszillationsachse O2 anfahrbar ist.

Der Linearantrieb kann dabei als Linearmotor oder auch als Schlitten-Spindelpaarung ausgebildet sein. Als dynamisch ist der Antrieb dann anzusehen, wenn durch ihn der Bearbeitungs- bzw. Zerspanungsprozess aktiv unterstützt bzw. beeinflusst wird. Dabei ist eine inkrementale, stetige oder stufenweise Ansteuerung vorgesehen.

Hierdurch wird erreicht, dass die zur Bearbeitung des Werkstücks bzw. der Linse notwendige Oszillationsachse O1, O2 teilweise in dem Werkzeughalter und ergänzend hierzu teilweise im Werkstückhalter angeordnet ist. Somit können insbesondere die gewünschten Hübe der jeweiligen Oszillationsachse O1, O2 einerseits sowie die gewünschten Bearbeitungs- bzw. Oszillationsfrequenzen, die Oszillation einer Achse oder eine Kombination aus den Oszillationen beider Achsen für die Bearbeitung verwendet werden. In diesem Zusammenhang ist es auch von Vorteil, dass das Verhältnis des Oszillationshubes des Werkzeughalters zum Oszillationshub des Werkstückhalters zwischen 0,08 und 1, insbesondere 0,13 ist. Bei der Herstellung einer Linse kann somit die Linsenfläche, die eine hochdynamische Ansteuerung für den Schneidmeißel voraussetzt, durch die hochdynamische erste Oszillationsachse O1 der Blattfederlagerung gewährleistet werden. Die fräsende Randbearbeitung erfolgt unter Einsatz der dynamischen zweiten Oszillationsachse O2, die einen wesentlich größeren Hub als die erste Oszillationsachse O1 aufweist.

Neben der Überlagerung bzw. Kombination der beiden Oszillationsachsen ist der Einsatz der dem Werkstückhalter zugeordneten Oszillationsachse O2 zur Bearbeitung des Werkstücks vorgesehen. In diesem Fall ist eine Oszillation des Werkzeughalters nicht notwendig, so dass dieser beispielsweise in Form eines Fräsers stationär angeordnet ist und das Werkstück die Oszillation durchführt. Beim Einsatz eines Drehmeißels zur Bearbeitung von Kunststofflinsenrohlingen wird dabei vorzugsweise zur Bearbeitung der optischen Fläche die erste Oszillationsachse O1, also der dynamische Werkzeugantrieb verwendet, wobei zur Bearbeitung des Rands bzw. zur Bearbeitung der Phasen und auch für die schruppende Grundbearbeitung die zweite Oszillationsachse O2 des Werkstückhalters Einsatz findet. Dabei ist alternativ zum Drehmeißel der Einsatz eines Fräsers vorgesehen.

Weitere Vorteile und Einzelheiten der Erfindung sind in den Patentansprüchen und in der Beschreibung erläutert und in den Figuren dargestellt. Es zeigt:
- Figur 1: eine perspektivische Schnittdarstellung des Linearantriebs;
- Figur 2: eine Schnittdarstellung in der Seitenansicht gemäß Schnitt A-A aus Figur 3;
- Figur 3: eine Schnittdarstellung in der Vorderansicht gemäß Schnitt C-C aus Figur 2;
- Figur 4: eine perspektivische Ansicht der bewegten Teile;
- Figur 5: eine perspektivische Ansicht der stehenden Gehäuseteile;
- Figur 6: eine perspektivische Ansicht des Lagersystems im Gesamten.

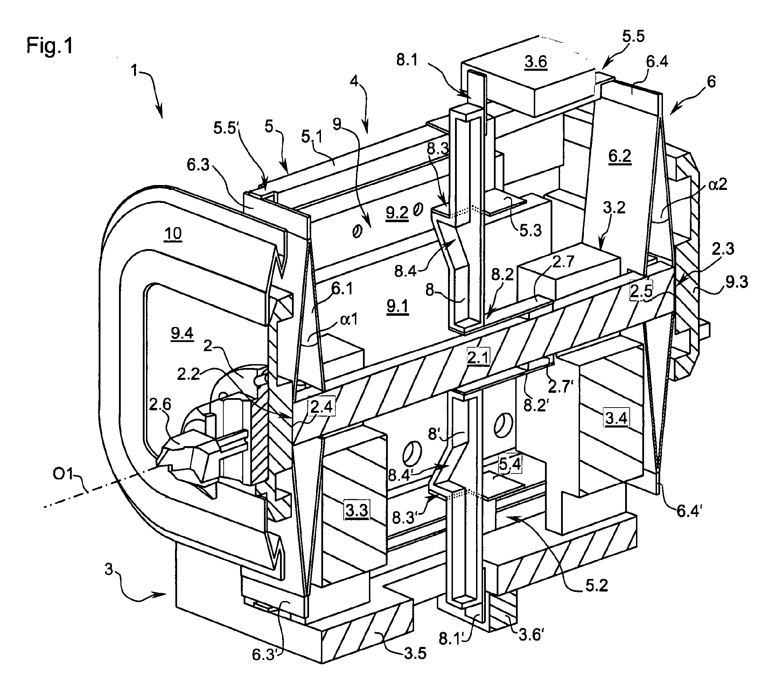

Ein in Figur 1 zur Hälfte dargestellter Linearantrieb 1 besteht aus einem mittig angeordneten Läufer 2.1, der an seiner vorderen Stirnseite 2.2 einen Werkzeughalter 2 für einen Drehmeißel 2.6 aufweist. Der Läufer 2.1 ist über eine

Kopplungsanordnung 5 und eine Führungsanordnung 6 schwingend in Richtung einer Oszillationsachse O1 innerhalb eines Gehäuses 3 gelagert. Hierzu weist das Gehäuse 3 ein erstes Gehäuseteil 3.3 und ein zweites Gehäuseteil 3.4 sowie einen Gehäuseträger 3.6 bzw. 3.6' auf, über den die Kopplungsanordnung 5 und die Führungsanordnung 6 am Gehäuse 3 schwingbar befestigt sind. Der Läufer 2.1 ist an seiner vorderen und hinteren Stirnseite 2.2, 2.3 über ein erstes Läuferlager 2.4 und ein zweites Läuferlager 2.5 mit der Führungsanordnung 6 fest verbunden. Daneben weist der Läufer 2.1 ein Halteteil 2.7, 2.7' auf, über das er mit einem als Lenker ausgebildeten Mitnehmerelement 8 gelenkig verbunden ist, wobei der Lenker 8 mit dem Gehäuseträger 3.6, 3.6' gelenkig verbunden ist.

Als Motor 9 für den Linearantrieb 1 ist beidseitig zum Läufer 2.1 ein Linearmotor 9, 9' vorgesehen, der jeweils einen U-förmigen Stator 9.1, 9.1' und einen darin aufgenommenen Aktor 9.2, 9.2' aufweist. Der Aktor 9.2, 9.2' bewegt sich dabei linear innerhalb des Stators 9.1, 9.1', wobei diese Linearbewegung über ein erstes Umlenkteil 9.3 sowie ein zweites Umlenkteil 9.4 im Bereich der Stirnseiten 2.2, 2.3 auf den Läufer 2.1 übertragen wird. Die Lagerung des Aktors 9.2, 9.2' erfolgt mittelbar über die Lagerung des Läufers 2.1.

Die Führungsanordnung 6 weist ein erstes und ein zweites Führungssegment 6.1, 6.2 auf, die jeweils stirnseitig am Läufer 2.1 über das erste und das zweite Läuferlager 2.4, 2.5 befestigt sind. Das jeweilige Führungssegment 6.1, 6.2 weist dabei eine rautenförmige Grundform auf, die durch das jeweilige Läuferlager 2.4, 2.5 und das jeweilige Gehäuselager 3.1, 3.2 einerseits sowie über die mit Bezug zur Oszillationsachse O1 gegenüberliegenden Endbereiche bzw. Enden 6.4, 6.4' und 6.3, 6.3' bestimmt wird. Der Kraftfluss läuft zunächst ausgehend vom Läufer 2.1 über das jeweilige Läuferlager 2.4, 2.5 auf das entsprechende Führungssegment 6.1, 6.2. Das Führungssegment 6.1, 6.2 ist wiederum mittig gegenüberliegend zum jeweiligen Läuferlager 2.4, 2.5 über das jeweilige Gehäuselager 3.1, 3.2 mit dem ersten bzw. zweiten Gehäuseteil 3.3, 3.4 verbunden. Ausgehend von dieser Lagerung könnte der Läufer 2.1, angeregt über den Motor 9 und das erste bzw. zweite Umlenkteil 9.3, 9.4, in Richtung der Oszillationsachse O1 oszillieren, wobei mit Rücksicht auf eine Auslenkbewegung in Richtung der Oszillationsachse O1 gegenläufige Verformungsbewegungen des jeweiligen Führungssegments 6.1, 6.2 entstehen. Bei einer Auslenkbewegung gemäß Figur 1 nach links würde das erste Führungssegment 6.1 eine Spreizung bzw. Erweiterung des Öffnungswinkels α1 erfahren, wobei das zweite Führungssegment 6.2 eine Verjüngung bzw. eine Verkleinerung des Öffnungswinkels α2 erfährt. Diese gegenläufige Winkelveränderung bringt eine Längenveränderung bzw. Abstandsveränderung zwischen den jeweiligen Endbereichen bzw. Enden 6.4, 6.4' und 6.3, 6.3' mit sich. Im vorgenannten Beispiel, also bei einer Bewegung des Läufers 2.1 gemäß Figur 1 nach links und einer Aufweitung des Winkels α1 des ersten Führungssegments 6.1, wird der Abstand der beiden Enden 6.3, 6.3' verkleinert. Im Gegenzug wird durch die Verkleinerung des Winkels α2 des zweiten Führungssegments 6.2 der Abstand der beiden Enden 6.4, 6.4' vergrößert.

Die beiden Führungssegmente 6.1, 6.2 sind dabei als flächige Blattfeder bzw. als flächiges Blattfederpaar, das an den jeweiligen Endbereichen bzw. Enden 6.3, 6.4 verbunden ist, ausgebildet.

Der Stator 9.1, 9.1' des Motors 9, 9' ist dabei mit dem Gehäuse 3 bzw. mit einer Gehäuseplatte 3.5 fest verbunden. Innerhalb des Stators 9.1 ist der Aktor 9.2 linear in Richtung der Oszillationsachse 1 bewegbar angeordnet. Der Läufer 9.2 ist über dem ersten und zweiten Umlenkteil 9.3, 9.4 mit dem ersten bzw. zweiten Führungssegment 6.1, 6.2 gekoppelt und über die vorgenannten Segmente am ersten und am zweiten Gehäuseteil bewegbar gelagert.

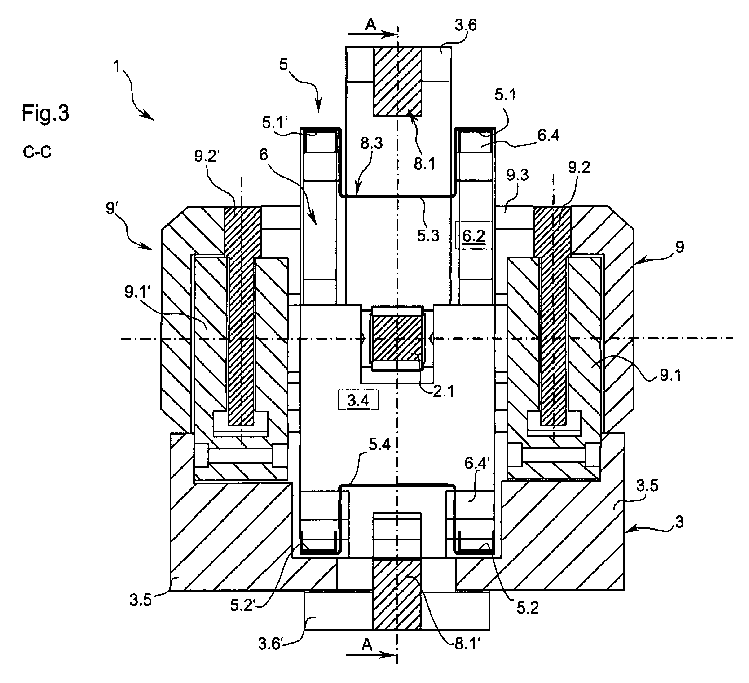

Zusätzlich zur Führungsanordnung 6 mit den beiden Führungssegmenten 6.1, 6.2 ist eine Kopplungsanordnung 5 vorgesehen, die ein erstes Kopplungssegment 5.1 sowie ein zweites Kopplungssegment 5.2 aufweist, welches die jeweiligen Enden 6.3, 6.4 und 6.3', 6.4' der beiden Führungssegmente 6.1, 6.2 verbindet. Aufgrund der Schnittdarstellung sind die benachbarten Kopplungssegmente 5.1' und 5.2' lediglich in Figur 3 ersichtlich. Das jeweilige Kopplungssegment 5.1', 5.2' ist dabei im Querschnitt U-förmig ausgebildet und weist an den beiden Stirnseiten eine als elastisches Gelenk ausgebildete nasenförmige Verbindungsstelle 5.5, 5.5' mit den Enden 6.3, 6.4 der Führungssegmente 6.1, 6.2 auf. Die oberen Enden 6.3, 6.4 werden dabei durch zwei benachbarte, in Figur 3 dargestellte Kopplungssegmente 5.1, 5.1' verbunden. Ein entsprechendes Paar Kopplungssegmente 5.2, 5.2' verbindet die beiden unteren Enden 6.3', 6.4' der beiden Führungssegmente 6.1, 6.2.

Zwecks Stabilisierung der Kopplungssegmente 5.1, 5.2 sind diese über ein Kopplungsglied 5.3, 5.4 und ein daran anschließendes drittes Gelenk 8.3 mit dem Lenker 8 verbunden. Das Kopplungsglied 5.3, 5.4 ist dabei als Doppel-L- bzw. U-förmiges Blattfederteil ausgebildet, das ausgehend von der Anbindung an das jeweilige Kopplungssegment 5.1, 5.2 zur Gewährleistung der gewünschten Anbindungsstelle an den Lenker 8 eine Höhendifferenz ausgleicht und auf Höhe des dritten Gelenks 8.3 beide Kopplungselemente 5.1, 5.2 gemäß Figur 3 miteinander verbindet. Das dritte Gelenk 8.3 ist dabei ebenfalls als Blattfeder bzw. elastisches Gelenk ausgebildet, so dass bei Verschwenkung des Lenkers 8 eine relative Verschwenkung zwischen dem Lenker 8 und dem Kopplungsglied 5.3, 5.4 möglich ist. Das dritte Gelenk 8.3 ist dabei über eine nasenförmige Ausformung 8.4 des Lenkers 8 beidseitig an diesem befestigt.

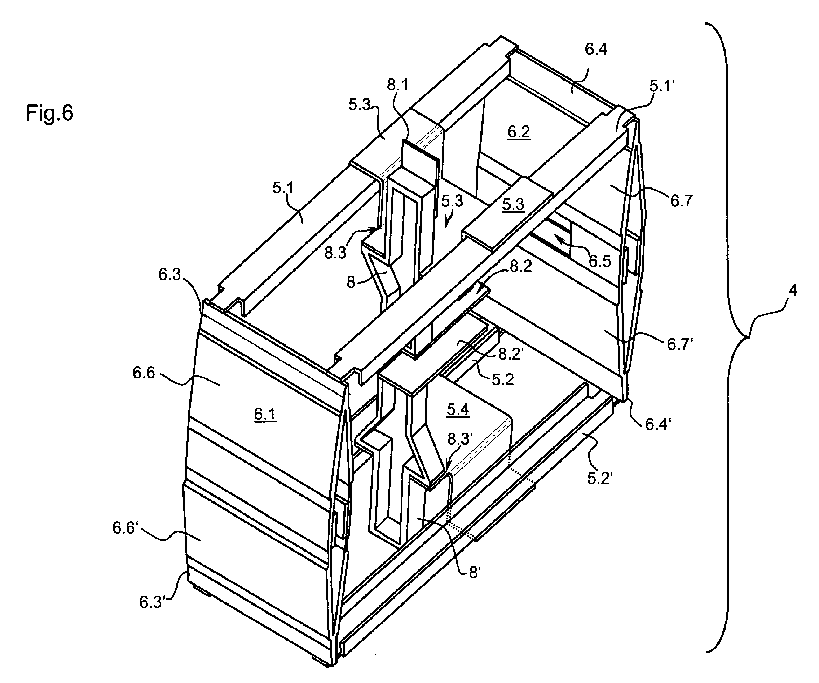

Zur Stabilisierung und Führung der Kopplungssegmente 5.1', 5.2' ist der Lenker 8, 8' vorgesehen, der sich in radialer Richtung zur Oszillationsachse O1 gemäß Figur 1 nach oben und nach unten erstreckt. Der Lenker 8 ist dabei über ein erstes elastisches Schwenkgelenk 8.1 mit dem Gehäuseträger 3.6 des Gehäuses 3 schwenkbar verbunden. Die Schwenkbewegung erfolgt dabei in Richtung der Oszillationsachse O1, wobei als Schwenkpunkt bzw. Drehpunkt dieser Schwenkbewegung das erste Gelenk 8.1 dient. Gegenüberliegend zum ersten Gelenk 8.1 ist der Lenker 8 über ein zweites elastisches Gelenk 8.2 mit dem Läufer 2.1 bzw. mit dem Halteteil 2.7 des Läufers 2.1 verbunden. Die beiden Gelenke 8.1, 8.2 sind dabei als längliche Blattfedern ausgebildet, wobei das erste Gelenk 8.1 kürzer ist als das zweite Gelenk 8.2. Damit gewährleistet das erste Gelenk 8.1 eine mit Rücksicht auf die Biegebewegung ansonsten steife Anbindung des Lenkers 8 an den Gehäuseträger 3.6. Das zweite Gelenk 8.2 ist länger ausgebildet, so dass eine Verschwenkung des Lenkers 8 relativ zum Läufer 2.1 um das zweite Gelenk 8.2 einerseits möglich ist und andererseits ein Längenausgleich in Richtung des Lenkers 8 rechtwinklig zur Oszillationsachse O1 gewährleistet ist. Durch die Auslenkbewegung des Lenkers 8 um das erste Gelenk 8.1 aufgrund einer Verschiebung des Läufers 2.1 in Richtung der Oszillationsachse O1 und der damit verbundenen Winkelstellung des Lenkers 8 ist eine Verschiebung des zweiten Gelenks 8.2 in Richtung des Lenkers 8 notwendig, da der Abstand zwischen dem ersten Gelenk 8.1 und dem Läufer 2.1 mit Rücksicht auf die relative Position zwischen dem Lenker 8 und dem Läufer 2.1 vergrößert wird. Der Lenker 8 ist dabei gemäß Figur 6 kastenförmig ausgebildet, so dass eine leichte und steife Konstruktion gegeben ist. Die nasenförmige Ausformung 8.4 des Lenkers 8 im Bereich seiner jeweiligen Seitenwand dient zur beidseitigen Auflage bzw. Befestigung des dritten Gelenks 8.3.

Der Abstand zwischen dem ersten Gelenk 8.1 und dem zweiten Gelenk 8.2 ist dabei doppelt so groß wie der Abstand zwischen dem ersten Gelenk 8.1 und dem dritten Gelenk 8.3, so dass bei einer Verschwenkung des Lenkers 8 um das erste Gelenk 8.1 der Verschiebeweg in Richtung der Oszillationsachse O1 des Kopplungsglieds 5.3, 5.4 bzw. des Kopplungssegments 5.1, 5.2 halb so groß ist wie der Verschiebeweg des zweiten Gelenks 8.2 bzw. des Läufers 2.1.

Der so geführte bzw. gelagerte Läufer 2.1 wird stirnseitig über eine Abdeckung 10 abgedichtet.

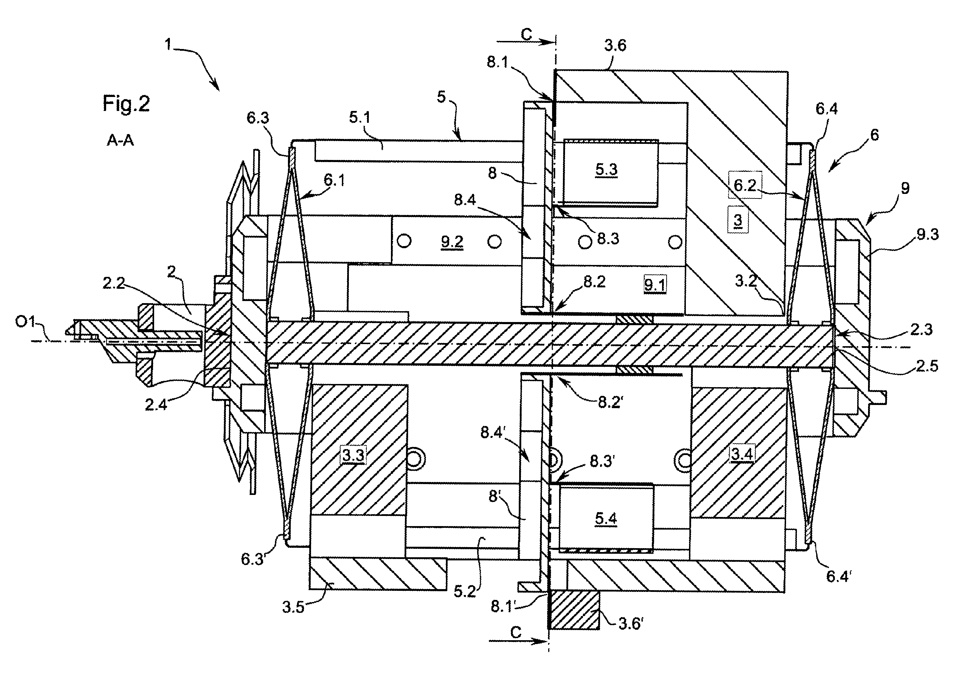

In der Seitenansicht gemäß Figur 2 wird die stirnseitige Anbindung des ersten und zweiten Umlenkteils 9.3, 9.4 an den Läufer 2.1 sowie die ebenfalls stirnseitig befestigten Führungssegmente 6.1, 6.2 und ihre Verbindung zu den beiden Gehäuseteilen 3.3, 3.4 deutlich. Der Gehäuseträger 6, an dem das erste Gelenk 8.1 für den Lenker 8 angeordnet ist, ist unmittelbar mit dem zweiten Gehäuseteil 3.4 verbunden.

Die beiden Kopplungsglieder 5.3, 5.4 zwischen dem Kopplungssegment 5.1, 5.2 und dem Lenker 8, 8' weisen eine rechteckförmige Flächenform auf, die eine größtmögliche Verwindungssteifigkeit bietet.

In der Schnittansicht von vorne ist das erste Gelenk 8.1 bzw. die das Gelenk 8.1 bildende Blattfeder geschnitten dargestellt, wobei die Anbindung an den dahinter befindlichen Gehäuseträger 3.6 deutlich wird. Der Gehäuseträger 3.6 erstreckt sich im Hintergrund nach unten zum zweiten Gehäuseteil 3.4. Das zweite Gehäuseteil 3.4 weist dabei im Bereich des Läufers 2.1 eine rechteckförmige Aussparung auf und erstreckt sich ansonsten mit Bezug auf diese Schnittdarstellung ganzflächig nach unten zur Bodenplatte 3.5. Die Kopplungssegmente 5.1, 5.1', 5.2, 5.2' sowie die Kopplungsglieder 5.3, 5.4 sind dabei im Schnitt dargestellt. Das Führungssegment 6.2 mit seinem oberen Ende 6.4 erstreckt sich dabei hinter dem Gehäuseträger 3.6 und hinter dem zweiten Gehäuseteil 3.4 nach unten zum unteren Ende 6.4', welches an die beiden Kopplungssegmente 5.2, 5.2' angeschlossen ist.

Das entsprechende untere erste Gelenk 8.1' ist dabei ebenfalls im Schnitt dargestellt und schließt an den entsprechenden unteren Gehäuseträger 3.6' an.

Die beiden Motoren 9, 9' sind seitlich zur vorgenannten Schwingungsanordnung platziert. Die beiden Statoren 9.1, 9.1' sind dabei fest mit der Gehäuseplatte 3.5 verbunden und im Querschnitt U-förmig ausgebildet und nehmen jeweils den Aktor 9.2, 9.2' auf. Der Aktor 9.2, 9.2' ist dabei über das erste Umlenkteil 9.3 mit der hier nicht dargestellten hinteren Stirnseite 2.3 des Läufers 2.1 verbunden.

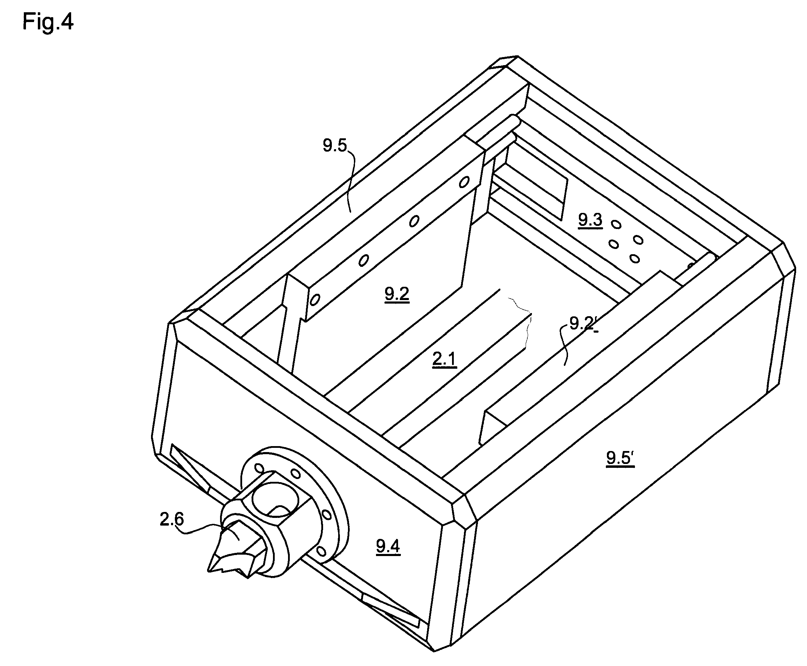

In Figur 4 sind die bewegten Teile des Linearantriebs 1 dargestellt. Neben dem Läufer 2.1 und dem Drehmeißel 2.6 sind das erste und zweite Umlenkteil 9.3, 9.4 sowie die beiden Aktoren 9.2, 9.2' des Motors 9, 9' dargestellt. Die beiden Aktoren 9.2, 9.2' sind dabei über Adapterteile 9.5, 9.5' mit den beiden Umlenkteilen 9.3, 9.4 fest verbunden.

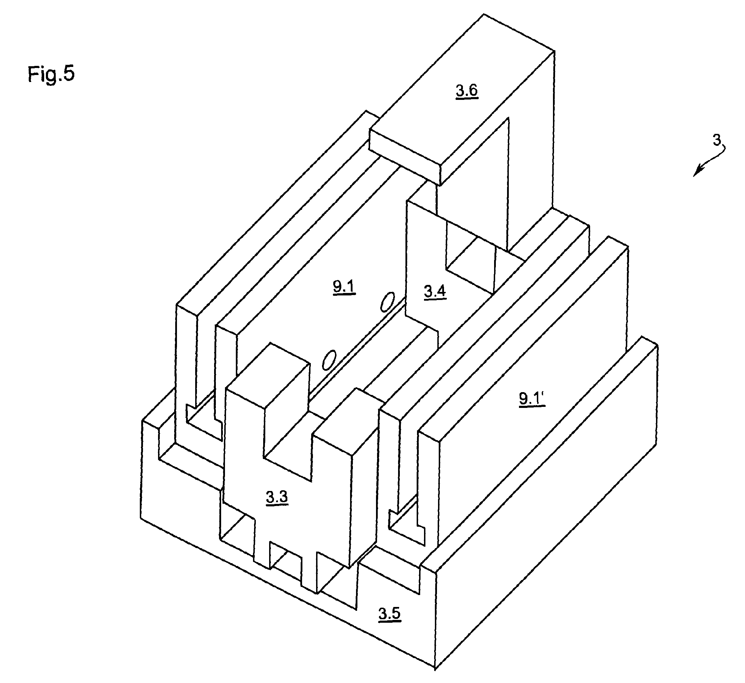

Figur 5 zeigt die wesentlichen Teile des feststehenden Gehäuses bestehend aus der Bodenplatte 3.5, den auf der Bodenplatte fest angeordneten Statoren 9.1, 9.1' als Teile des Motors 9, 9' sowie den beiden Gehäuseteilen 3.3, 3.4 zur Aufnahme der nicht dargestellten Führungssegmente und schließlich dem Gehäuseträger 3.6 zur Aufnahme des oberen ersten Gelenks 8.1. Die Gehäuseteile 3.4, 3.3 weisen die zuvor erwähnte rechteckförmige Aussparung zur beweglichen Aufnahme des nicht dargestellten Läufers auf.

Die beiden im Querschnitt U-förmigen Statoren 9.1, 9.1' weisen die entsprechende flache, schlitzförmige Öffnung zur Aufnahme der nicht dargestellten Aktoren auf.

Figur 6 zeigt die Federelemente insgesamt, also die beiden doppelten Führungssegmente 6.1, 6.2 und die vier die beiden Führungssegmente 6.1, 6.2 im Bereich der Enden 6.3 verbindenden Kopplungssegmente 5.1, 5.1', 5.2 und 5.2'. Daneben sind die beiden Lenker 8, 8' dargestellt sowie die an ihnen angeordneten Gelenke, nämlich das erste Gelenk 8.1, das zweite Gelenk 8.2 bzw. 8.2' sowie das dritte Gelenk 8.3 und 8.3', wobei letztgenannte zur Anbindung an den nicht dargestellten Läufer dienen. Das hier dargestellte untere zweite Gelenk 8.2' ist an das Kopplungsglied 5.4 angeschlossen. Das korrespondierende Kopplungsglied 5.3 ist dabei ebenfalls an das hier nicht dargestellte zweite Lager angeschlossen. Das obere Kopplungsglied 5.3 und das untere Kopplungsglied 5.4 sind im Querschnitt U-förmig ausgebildet und umschließen an der Verbindungsstelle zu den jeweiligen Kopplungssegmenten 5.1, 5.2 diese umseitig.

Das zweite Führungssegment 6.2 weist auf seiner inneren Seite eine Aussparung 6.5 zur Aufnahme des hier nicht dargestellten Läufers auf. Eine entsprechende Aussparung ist auch auf der Innenseite des ersten Führungssegments 6.1 vorgesehen. Im Bereich dieser Aussparung 6.5 ist das jeweilige Führungssegment 6.1, 6.2 an das hier nicht dargestellte erste und zweite Gehäuseteil angebunden.

Das jeweilige Führungssegment 6.1, 6.2 ist über mindestens ein balken- oder plattenförmiges Versteifungselement 6.6, 6.6', 6.7, 6.7' im Bereich zwischen den beiden Enden 6.3, 6.3' bzw. 6.4, 6.4' beidseitig verstärkt. Das Versteifungselement 6.6, 6.6', 6.7, 6.7' ist dabei direkt auf das Führungssegment 6.1, 6.2 aufgeklebt oder aufgeschweißt. In einem nicht dargestellten Ausführungsbeispiel ist das Versteifungselement 6.6, 6.6', 6.7, 6.7' auf ein am Führungssegment 6.1, 6.2 angeschweißtes Adapterelement aufgeklebt. Das Adapterelement ist dabei wannenförmig ausgebildet, so dass das Versteifungselement neben der Anlagefläche auch über mindestens eine angrenzende Stirnseite mit dem Adapterelement verklebt werden kann. Das Versteifungselement ist vorzugsweise aus Kohlefaser gebildet.

### Bezugszeichenliste

- 1: Linearantrieb
- 2: Werkzeughalter
- 2.1: Läufer
- 2.2: vordere Stirnseite
- 2.3: hintere Stirnseite
- 2.4: erstes Läuferlager
- 2.5: zweites Läuferlager
- 2.6: Drehmeißel
- 2.7: Halteteil
- 2.7': Halteteil
- 3: Gehäuse
- 3.1: Gehäuselager
- 3.2: Gehäuselager
- 3.3: erstes Gehäuseteil
- 3.4: zweites Gehäuseteil
- 3.5: Bodenplatte, Gehäuseplatte
- 3.6: Gehäuseträger
- 3.6': Gehäuseträger
- 4: Blattfederlagerung
- 5: Kopplungsanordnung
- 5.1: erstes Kopplungssegment
- 5.1': erstes Kopplungssegment
- 5.2: zweites Kopplungssegment
- 5.2': zweites Kopplungssegment
- 5.3: Kopplungsglied
- 5.4: Kopplungsglied
- 5.5: elastisches Gelenk, Verbindungsstelle
- 5.5': elastisches Gelenk, Verbindungsstelle
- 6: Führungsanordnung
- 6.1: erstes Führungssegment, Blattfeder
- 6.2: zweites Führungssegment, Blattfeder
- 6.3: Ende, Endbereich
- 6.3': Ende, Endbereich
- 6.4: Ende, Endbereich
- 6.4': Ende, Endbereich
- 6.5: Aussparung
- 6.6: Versteifungselement
- 6.6': Versteifungselement
- 6.7: Versteifungselement
- 6.7': Versteifungselement
- 8: Lenker, Mitnehmerelement
- 8': Lenker, Mitnehmerelement
- 8.1: erstes Gelenk, elastisches Gelenk, Blattfeder
- 8.1': erstes Gelenk, elastisches Gelenk, Blattfeder
- 8.2: zweites Gelenk, elastisches Gelenk, Blattfeder
- 8.2': zweites Gelenk, elastisches Gelenk, Blattfeder
- 8.3: drittes Gelenk, elastisches Gelenk, Blattfeder
- 8.3': drittes Gelenk, elastisches Gelenk, Blattfeder
- 8.4: nasenförmige Ausformung
- 9: Motor
- 9.1: Stator
- 9.1': Stator
- 9.2: Aktor
- 9.2': Aktor
- 9.3: erstes Umlenkteil
- 9.4: zweites Umlenkteil
- 9.5: Adapterteil
- 9.5': Adapterteil
- 10: Abdeckung

- O1: Oszillationsachse
- O2: Oszillationsachse
- α1: Öffnungswinkel
- α2: Öffnungswinkel
- R1: Rotationsachse

## Patentansprüche

1. Linearantrieb (1) für eine hochdynamische Linsenbearbeitungsmaschine mit einer linearen Oszillationsachse O1 für einen Werkzeughalter (2), wobei der Linearantrieb (1) ein Gehäuse (3) mit einem linear bewegbar gelagerten Läufer (2.1) für den Werkzeughalter (2) und/oder den Werkstückhalter aufweist und der Läufer (2.1) über eine aus Blattfedern gebildete, eine Führungsanordnung (6) aufweisende Blattfederlagerung (4) im Gehäuse (3) koaxial zur Oszillationsachse O1 geführt ist, wobei die Führungsanordnung (6) aus einem ersten Führungssegment (6.1) und einem in Richtung der Oszillationsachse O1 mit Abstand angeordneten zweiten Führungssegment (6.2) gebildet ist,
**dadurch gekennzeichnet,**
**dass** die Blattfederlagerung (4) neben der Führungsanordnung (6) eine daran angeschlossene, aus Blattfedern gebildete Kopplungsanordnung (5) zwecks Kopplung der beiden Führungssegmente (6.1, 6.2) aufweist.

2. Linearantrieb (1) nach Anspruch 1,
**dadurch gekennzeichnet,**
**dass** die Führungsanordnung (6) und/oder die Kopplungsanordnung (5) mittel- oder unmittelbar mit dem Läufer (2.1) und/oder mit dem Gehäuse (3) verbunden sind.

3. Linearantrieb (1) nach Anspruch 1 oder 2,
**dadurch gekennzeichnet,**
**dass** das jeweilige Führungssegment (6.1, 6.2) mindestens ein balken- oder plattenförmiges Versteifungselement (6.6, 6.6', 6.7, 6.7') aufweist.

4. Linearantrieb (1) nach Anspruch 3,
**dadurch gekennzeichnet,**
**dass** das jeweilige Versteifungselement (6.6, 6.6', 6.7, 6.7') kohlefaserverstärkt ist oder aus Kohlefaser gebildet ist.

5. Linearantrieb (1) nach einem der Ansprüche 3 bis 4,
**dadurch gekennzeichnet,**
**dass** das jeweilige Versteifungselement (6.6, 6.6', 6.7, 6.7') auf ein am Führungssegment (6.1, 6.2) angeschweißtes Adapterelement aufgeklebt ist.

6. Linearantrieb (1) nach einem der vorhergehenden Ansprüche,
**dadurch gekennzeichnet,**
**dass** der Läufer (2.1) in Richtung der Oszillationsachse O1 eine vordere Stirnseite (2.2) und eine hintere Stirnseite (2.3) aufweist, wobei zur Bildung eines ersten (2.4) und eines zweiten Läuferlagers (2.5) das jeweilige Führungssegment (6.1, 6.2) im Bereich der Stirnseite (2.2, 2.3) am Läufer (2.1) befestigt ist.

7. Linearantrieb (1) nach einem der vorhergehenden Ansprüche,
**dadurch gekennzeichnet,**
**dass** die in radialer Richtung zur Oszillationsachse O2 äußeren Endbereiche (6.3, 6.3', 6.4, 6.4') der Führungssegmente (6.1, 6.2) mit der Kopplungsanordnung (5) verbunden sind.

8. Linearantrieb (1) nach einem der vorhergehenden Ansprüche,
**dadurch gekennzeichnet,**
**dass** die Kopplungsanordnung (5) aus einem ersten Kopplungssegment (5.1) und einem zweiten Kopplungssegment (5.2) gebildet ist, die mit Bezug zur Oszillationsachse O1 gegenüberliegend zueinander angeordnet sind.

9. Linearantrieb (1) nach Anspruch 7 oder 8,
**dadurch gekennzeichnet,**
**dass** mindestens ein Ende (6.3, 6.3') des ersten Führungssegments (6.1) und mindestens ein Ende (6.4, 6.4') des zweiten Führungssegments (6.2) über mindestens ein Kopplungssegment (5.1, 5.2) verbunden sind.

10. Linearantrieb (1) nach Anspruch 8 oder 9,
**dadurch gekennzeichnet,**
**dass** die Verbindung zwischen dem Führungssegment (6.1, 6.2) und dem Kopplungssegment (5.1, 5.2) als Steckverbindung ausgebildet ist.

11. Linearantrieb (1) nach einem der Ansprüche 8 bis 10,
**dadurch gekennzeichnet,**
**dass** das Führungssegment (6.1, 6.2) eine rautenförmige oder ovale Form aufweist und über ein Gehäuselager (3.1, 3.2) am Gehäuse (3) befestigt ist.

12. Linearantrieb (1) nach einem der vorhergehenden Ansprüche,
**dadurch gekennzeichnet,**
**dass** zwischen dem Gehäuse (3) und dem Läufer (2.1) ein in radialer Richtung zur Oszillationsachse O1 ausgerichtetes, als Lenker ausgebildetes Mitnehmerelement (8) vorgesehen ist, wobei der Lenker (8) über ein erstes Gelenk (8.1) mit dem Gehäuse (3) und über ein zweites Gelenk (8.2) mit dem Läufer (2.1) verbunden ist.

13. Linearantrieb (1) nach Anspruch 12,
**dadurch gekennzeichnet,**
**dass** mindestens ein Kopplungssegment (5.1, 5.2) über ein drittes Gelenk (8.3) mit dem Lenker (8) verbunden ist.

14. Linearantrieb (1) nach Anspruch 12 oder 13,
**dadurch gekennzeichnet,**
**dass** das Gelenk (8.1 bis 8.3) als Wälzlager oder als elastisches Biegegelenk ausgebildet ist.

15. Linearantrieb (1) nach einem der Ansprüche 12 bis 14,
**dadurch gekennzeichnet,**
**dass** in radialer Richtung zur Oszillationsachse O1 zwischen dem ersten Gelenk (8.1) und dem zweiten Gelenk (8.2) ein Abstand A vorgesehen ist und zwischen dem ersten Gelenk (8.1) und dem dritten Gelenk (8.3) ein Abstand B vorgesehen ist, wobei das Verhältnis A zu B der beiden Abstände 2 beträgt.

16. Linearantrieb (1) nach einem der Ansprüche 12 bis 14,
**dadurch gekennzeichnet,**
**dass** das zweite Gelenk (8.2) zusätzlich eine Relativbewegung zwischen dem Lenker (8) und dem Läufer (2.1) in rechtwinkliger Richtung zur Oszillationsachse O1 gewährleistet.

17. Linearantrieb (1) nach einem der Ansprüche 13 bis 16,
**dadurch gekennzeichnet,**
**dass** mindestens ein Kopplungssegment (5.1, 5.2) über ein Kopplungsglied (5.3, 5.4) mit dem dritten Gelenk (8.3) verbunden ist.

18. Linearantrieb (1) nach einem der Ansprüche 8 bis 17,
**dadurch gekennzeichnet,**
**dass** das Kopplungssegment (5.1, 5.2) und/oder das Kopplungsglied (5.3, 5.4) ein U-, L- oder dreieckförmiges Querschnittsprofil aufweist.

19. Linearantrieb (1) nach einem der Ansprüche 8 bis 18,
**dadurch gekennzeichnet,**
**dass** das Kopplungssegment (5.1, 5.2) eine als elastisches Gelenk ausgebildete Verbindungsstelle (5.5, 5.5') mit den Enden (6.3, 6.4) der Führungssegmente (6.1, 6.2) aufweist.

20. Linearantrieb (1) nach einem der Ansprüche 12 bis 19,
**dadurch gekennzeichnet,**
**dass** der Abstand zwischen dem Gehäuse (3) und dem Lenker (8) und/oder dem ersten Gelenk (8.1) über eine Einstellvorrichtung einstellbar ist.

21. Linearantrieb (1) nach einem der Ansprüche 12 bis 20,
**dadurch gekennzeichnet,**
**dass** der Läufer (2.1) über den Lenker (8) und über das Führungssegment (6.1, 6.2) am Gehäuse (3), das Führungssegment (6.1, 6.2) am Kopplungssegment (5.1, 5.2), das Kopplungssegment (5.1, 5.2) über den Lenker (8) am Gehäuse (3) gelagert sind.

22. Linearantrieb (1) nach einem der vorhergehenden Ansprüche,
**dadurch gekennzeichnet,**
**dass** dem Läufer (2.1) mindestens ein U-förmiger Linearmotor (9) zugeordnet ist, der aus dem durch zwei parallel angeordnete Magnetschienen gebildeten Stator (9.1, 9.1') besteht, wobei die Magnetschienen den Aktor (9.2, 9.2') zwischen sich aufnehmen.

23. Linearantrieb (1) nach einem der vorhergehenden Ansprüche,
**dadurch gekennzeichnet,**
**dass** der U-förmige Linearmotor (9) in Bezug zu einer durch den Aktor (9.2, 9.2') aufgespannten Ebene parallel zu einer durch die Standfläche der Bodenplatte (3.5) ausgebildeten Ebene ausgerichtet ist.

24. Hochdynamische Linsenbearbeitungsmaschine mit einem Maschinenbett, auf dem mindestens ein erster Werkzeughalter (2) und ein eine Werkstückspindel aufweisender Werkstückhalter mit einer Rotationsachse R1 angeordnet sind, wobei der erste Werkzeughalter (2) mindestens einen dynamischen Werkzeuglinearantrieb (1) mit einer parallel zur Rotationsachse R1 verlaufenden ersten Oszillationsachse O1 aufweist,
**gekennzeichnet durch**
den Linearantrieb (1) nach einem der vorhergehenden Ansprüche, welcher dem Werkstückhalter zugeordnet ist und in Richtung einer parallel zur ersten Oszillationsachse O1 angeordneten zweiten Oszillationsachse O2 verfährt, und
**dadurch**,
dass ein stationär angeordneter zweiter Werkzeughalter vorgesehen ist, an den das Werkstück über die zweite Oszillationsachse O2 anfahrbar ist.

## Claims

1. A linear drive (1) for a highly dynamic lens processing machine with a linear oscillation axis O1 for a tool holder (2), wherein the linear drive (1) comprises a housing (3) with a rotor (2.1) which can be moved in a linear direction for the tool holder (2) and/or the workpiece holder, and the rotor (2.1) is guided coaxially to the oscillation axis O1 over a flat spring bed (4) in the housing (3) said flat spring bed being formed from flat springs and comprising a guide arrangement (6), wherein the guide arrangement (6) is formed from a first guide segment (6.1) and a second guide segment (6.2) which is arranged in the direction of the oscillation axis O1 at a distance,
**characterized in that**,
the flat spring bed (4) comprises alongside the guide arrangement (6) a coupling arrangement (5) which is attached to it and which is formed from flat springs for the purpose of coupling the two guide segments (6.1, 6.2).

2. A linear drive (1) according to claim 1,
**characterized in that**,
the guide arrangement (6) and/or the coupling arrangement (5) are indirectly or directly connected with the rotor (2.1) and/or with the housing (3).

3. A linear drive (1) according to either of claims 1 or 2,
**characterized in that**,
the respective guide segment (6.1, 6.2) comprises at least one bar-shaped or plate-shaped stiffening element (6.6, 6.6', 6.7, 6.7').

4. A linear drive (1) according to claim 3,
**characterized in that**,
the respective stiffening element (6.6, 6.6', 6.7, 6.7') is carbon fibre-reinforced, or is formed from carbon fibre.

5. A linear drive (1) according to either of claims 3 or 4,
**characterized in that**,
the respective stiffening element (6.6, 6.6', 6.7, 6.7') is adhered to an adapter element which is welded to the guide segment (6.1, 6.2).

6. A linear drive (1) according to any one of the preceding claims,
**characterized in that**,
the rotor (2.1) comprises in the direction of the oscillation axis O1 a front face side (2.2) and a rear face side (2.3), wherein in order to form a first (2.4) and a second rotor bearing (2.5), the respective guide segment (6.1, 6.2) is affixed in the region of the face side (2.2, 2.3) on the rotor (2.1).

7. A linear drive (1) according to any one of the preceding claims,
**characterized in that**,
the outer end sections (6.3, 6.3', 6.4, 6.4') of the guide segments (6.1, 6.2) are connected with the coupling arrangement (5), in a radial direction to the oscillation axis O2.

8. A linear drive (1) according to any one of the preceding claims,
**characterized in that**,
the coupling arrangement (5) is formed from a first coupling segment (5.1) and a second coupling segment (5.2), which are arranged opposite each other with reference to the oscillation axis O1.

9. A linear drive (1) according to either of claims 7 or 8,
**characterized in that**,
at least one end (6.3, 6.3') of the first guide segment (6.1) and at least one end (6.4, 6.4') of the second guide segment (6.2) are connected via at least one coupling segment (5.1, 5.2).

10. A linear drive (1) according to either of claims 8 or 9,
**characterized in that**,
the connection between the guide segment (6.1, 6.2) and the coupling segment (5.1, 5.2) is designed as a plug-in connection.

11. A linear drive (1) according to any one of claims 8 to 10,
**characterized in that**,
the guide segment (6.1, 6.2) has a rhomboid or oval form, and is attached by means of a housing bearing (3.1, 3.2) to the housing (3).

12. A linear drive (1) according to any one of the preceding claims,
**characterized in that**,
between the housing (3) and the rotor (2.1), a carrier element (8) is provided which is aligned in a radial direction to the oscillation axis O1, and which is designed as a guide rod, wherein the guide rod (8) is connected via a first joint (8.1) with the housing (3) and via a second joint (8.2) with the rotor (2.1).

13. A linear drive (1) according to claim 12,
**characterized in that**,
at least one coupling segment (5.1, 5.2) is connected via a third joint (8.3) with the guide rod (8).

14. A linear drive (1) according to either of claims 12 or 13,
**characterized in that**,
the joint (8.1 to 8.3) is designed as a rolling bearing or as an elastic flexible joint.

15. A linear drive (1) according to any one of claims 12 to 14,
**characterized in that**,
in a radial direction to the oscillation axis O1 between the first joint (8.1) and the second joint (8.2), a space A is provided, and between the first joint (8.1) and the third joint (8.3) a space B is provided, whereby the ratio from A to B of both spaces equals 2.

16. A linear drive (1) according to any one of claims 12 to 14,
**characterized in that**,
the second joint (8.2) additionally guarantees a relative movement between the guide rod (8) and the rotor (2.1) in a right-angled direction to the oscillation axis O1.

17. A linear drive (1) according to any one of claims 13 to 16,
**characterized in that**,
at least one coupling segment (5.1, 5.2) is connected via a coupling member (5.3, 5.4) with the third joint (8.3).

18. A linear drive (1) according to any one of claims 8 to 17,
**characterized in that**,
the coupling segment (5.1, 5.2) and/or the coupling element (5.3, 5.4) comprises a U-shaped, L-shaped or triangular cross-sectional profile.

19. A linear drive (1) according to any one of claims 8 to 18,
**characterized in that**,
the coupling segment (5.1, 5.2) comprises a connection point (5.5, 5.5') which is designed as an elastic joint with the ends (6.3, 6.4) of the guide segments (6.1, 6.2).

20. A linear drive (1) according to any one of claims 12 to 19,
**characterized in that**,
the distance between the housing (3) and the guide rod (8) and/or the first joint (8.1) can be set using a setting device.

21. A linear drive (1) according to any one of claims 12 to 20,
**characterized in that**,
the rotor (2.1) is supported via the guide rod (8) and via the guide segment (6.1, 6.2) on the housing (3), that the guide segment (6.1, 6.2) is supported on the coupling segment (5.1, 5.2), and that the coupling segment (5.1, 5.2) is supported on the housing (3) via the guide rod (8).

22. A linear drive (1) according to any one of the preceding claims,
**characterized in that**,
the rotor (2.1) is assigned at least one U-shaped linear motor (9), which consists of the stator (9.1, 9.1') which is formed from two magnetic tracks which are arranged in paralle, wherein the magnetic tracks retain the actuator (9.2, 9.2') between each other.

23. A linear drive (1) according to any one of the preceding claims,
**characterized in that**,
in relation to a plane which is held by the actuator (9.2, 9.2'), the U-shaped linear motor (9) is aligned in parallel with a plane which is formed by the standing surface of the floor plate (3.5).

24. A highly dynamic lens processing machine with a machine bed, on which at least one first tool holder (2) and a workpiece holder which comprises a workpiece spindle are arranged with a rotational axis R1, wherein the first tool holder (2) comprises at least one dynamic tool linear drive (1) with an oscillation axis O1 which runs parallel to the rotational axis R1,
**characterized by**
the linear drive (1) according to any one of the preceding claims, which is assigned to the workpiece holder, and which runs in the direction of a second oscillation axis O2 which is arranged in parallel to the first oscillation axis O1, and
**characterized in that**
a second, stationary tool holder is provided, on which the workpiece can be approached via the second oscillation axis O2.

## Revendications

1. Entraînement linéaire (1) pour une machine pour le traitement de lentilles à dynamique élevée avec un axe d'oscillation O1 linéaire pour un porte-outil (2), l'entraînement linéaire (1) présentant un boîtier (3) avec un coulisseau (2.1) suspendu de façon déplaçable linéairement pour le porte-outil (2) et/ou le porte-pièce et le coulisseau (2.1) étant mené de façon coaxiale relativement à l'axe d'oscillation O1 dans le boîtier (3) par une suspension à ressort à lames (4) présentant un dispositif de guidage (6), formée par des ressorts à lames, le dispositif de guidage (6) étant formé d'un premier segment de guidage (6.1) et d'un deuxième segment de guidage (6.2) disposé à distance en direction de l'axe d'oscillation O1,
**caractérisé en ce que**
la suspension à ressort à lames (4) présente, en plus du dispositif de guidage (6), un dispositif de couplage (5) formé de ressorts à lames relié à celui-ci, en vue de l'accouplement des deux segments de guidage (6.1, 6.2).

2. Entraînement linéaire (1) selon la revendication 1,
**caractérisé en ce que**
le dispositif de couplage (6) et/ou le dispositif de guidage (5) sont reliés directement ou indirectement avec le coulisseau (2.1) et/ou avec le boîtier (3).

3. Entraînement linéaire (1) selon la revendication 1 ou 2,
**caractérisé en ce que**
le segment de guidage (6.1, 6.2) respectif présente au moins un élément de rigidification (6.6, 6.6', 6.7, 6.7') en forme de barre ou de plaque.

4. Entraînement linéaire (1) selon la revendication 3,
**caractérisé en ce que**
l'élément de rigidification (6.6, 6.6', 6.7, 6.7') respectif est renforcé aux fibres de carbone ou formé de fibre de carbone.

5. Entraînement linéaire (1) selon l'une des revendications 3 à 4,
**caractérisé en ce que**
l'élément de rigidification (6.6, 6.6', 6.7, 6.7') respectif est collé sur un élément adaptateur soudé au segment de guidage (6.1, 6.2).

6. Entraînement linéaire (1) selon l'une des revendications précédentes,
**caractérisé en ce que**
le coulisseau (2.1) présente une face avant (2.2) et une face arrière (2.3) dans la direction de l'axe d'oscillation O1, le segment de guidage (6.1, 6.2) respectif étant fixé au coulisseau (2.1) dans la zone de la face (2.2, 2.3) pour la formation d'un premier (2.4) et d'un second (2.5) appuis de coulisseau.

7. Entraînement linéaire (1) selon l'une des revendications précédentes,
**caractérisé en ce que**
les zones d'extrémité (6.3, 6.3', 6.4, 6.4') extérieures des segments de guidage (6.1, 6.2) en direction radiale relativement à l'axe d'oscillation O2 sont reliées au dispositif de couplage (5).

8. Entraînement linéaire (1) selon l'une des revendications précédentes,
**caractérisé en ce que**
le dispositif de couplage (5) est formé d'un premier segment de couplage (5.1) et d'un deuxième segment de couplage (5.2), lesquels sont disposés de façon opposée l'un à l'autre relativement à l'axe d'oscillation O1.

9. Entraînement linéaire (1) selon la revendication 7 ou 8,
**caractérisé en ce qu'**
au moins une extrémité (6.3, 6.3') du premier segment de guidage (6.1) et au moins une extrémité (6.4, 6.4') du deuxième segment de guidage (6.2) sont reliées par au moins un segment d'accouplement (5.1, 5.2).

10. Entraînement linéaire (1) selon la revendication 8 ou 9,
**caractérisé en ce que**
la liaison entre le segment de guidage (6.1, 6.2) et le segment d'accouplement (5.1, 5.2) est formée comme assemblage par emboîtement.

11. Entraînement linéaire (1) selon l'une des revendications 8 à 10,
**caractérisé en ce que**
le segment de guidage (6.1, 6.2) présente une forme ovale ou en losange et est fixé au boîtier (3) par un appui de boîtier (3.1, 3.2).

12. Entraînement linéaire (1) selon l'une des revendications précédentes,
**caractérisé en ce qu'**
un élément entraînant (8) formé comme barre de liaison, orienté en direction radiale relativement à l'axe d'oscillation O1 est prévu entre le boîtier (3) et le coulisseau (2.1), la barre de liaison (8) étant reliée par une première articulation (8.1) avec le boîtier (3) et par une deuxième articulation (8.2) avec le coulisseau (2.1).

13. Entraînement linéaire (1) selon la revendication 12,
**caractérisé en ce qu'**
au moins un segment de couplage (5.1, 5.2) est relié avec la barre de liaison (8) par une troisième articulation (8.3).

14. Entraînement linéaire (1) selon la revendication 12 ou 13,
**caractérisé en ce que**
l'articulation (8.1 à 8.3) est formée comme palier à roulement ou comme articulation de flexion élastique.

15. Entraînement linéaire (1) selon l'une des revendications 12 à 14,
**caractérisé en ce qu'**
en direction radiale relativement à l'axe d'oscillation O1, un écart A est prévu entre la première articulation (8.1) et la deuxième articulation (8.2) et qu'un écart B est prévu entre la première articulation (8.1) et la troisième articulation (8.3), le rapport de A à B des deux écarts s'élevant à 2.

16. Entraînement linéaire (1) selon l'une des revendications 12 à 14,
**caractérisé en ce que**
la deuxième articulation (8.2) garantit en plus un mouvement relatif entre la barre de liaison (8) et le coulisseau (2.1) en direction perpendiculaire relativement à l'axe d'oscillation O2.

17. Entraînement linéaire (1) selon l'une des revendications 13 à 16,
**caractérisé en ce qu'**
au moins un segment de couplage (5.1, 5.2) est relié à un membre de couplage (5.3, 5.4) par la troisième articulation (8.3).

18. Entraînement linéaire (1) selon l'une des revendications 8 à 17,
**caractérisé en ce que**
le segment de couplage (5.1, 5.2) et/ou le membre de couplage (5.3, 5.4) présentent un profil transversal en U, en L ou en forme de triangle.

19. Entraînement linéaire (1) selon l'une des revendications 8 à 18,
**caractérisé en ce que**
le segment de couplage (5.1, 5.2) présente un point de jonction (5.5, 5.5') formé comme articulation élastique, avec les extrémités (6.3, 6.4) des segments de guidage (6.1, 6.2).

20. Entraînement linéaire (1) selon l'une des revendications 12 à 19,
**caractérisé en ce que**
l'écart entre le boîtier (3) et la barre de liaison (8) et/ou la première articulation (8.1) est réglable par un dispositif de réglage.

21. Entraînement linéaire (1) selon l'une des revendications 12 à 20,
**caractérisé en ce que**
le coulisseau (2.1) est suspendu par la barre de liaison (8) et par le segment de guidage (6.1, 6.2) au boîtier (3), le segment de guidage (6.1, 6.2) est suspendu au segment de couplage (5.1, 5.2), le segment de couplage (5.1, 5.2) est suspendu par la barre de liaison (8) au boîtier (3).

22. Entraînement linéaire (1) selon l'une des revendications précédentes,
**caractérisé en ce qu'**
au moins un moteur linéaire (9) en U est attribué au coulisseau (2.1), lequel moteur se compose du stator (9.1, 9.1') formé par deux barres aimantées disposées parallèlement, les barres aimantées accueillant l'actionneur (9.2, 9.2') entre elles.

23. Entraînement linéaire (1) selon l'une des revendications précédentes,
**caractérisé en ce que**
le moteur linéaire (9) en forme de U est disposé parallèlement à un plan formé par la base de la plaque de sol (3.5), relativement à un plan défini par l'actionneur (9.2, 9.2').

24. Machine pour le traitement de lentilles à dynamique élevée avec un socle sur lequel au moins un premier porte-outil (2) et un porte-pièce présentant une broche porte-pièce sont disposés avec un axe de rotation R1, le premier porte-outil (2) présentant au moins un entraînement linéaire d'outil (1) dynamique avec un premier axe d'oscillation O1 s'étendant parallèlement à l'axe de rotation R1,
**caractérisée par**
l'entraînement linéaire (1) selon l'une des revendications précédentes, lequel est attribué au porte-pièce et se déplace en direction d'un axe d'oscillation O2 disposé parallèlement au premier axe d'oscillation O1, et
**caractérisée en ce que**
un deuxième porte-outil disposé stationnairement est prévu, vers lequel la pièce à usiner est déplaçable selon le deuxième axe d'oscillation O2.
